# EUROPÄISCHE PATENTSCHRIFT

(11) **EP 0 459 220 B1**
(45) Veröffentlichungstag und Bekanntmachung des Hinweises auf die Patenterteilung: **07.04.1993**
(21) Anmeldenummer: 91107853.3
(22) Anmeldetag: 15.05.1991
(51) Int. Cl.: F16F 1/36, B60K 5/12

(54) **Ringförmiger Federkörper aus Faserverbundwerkstoffen**
Ring-shaped spring made out of fibre composites
Ressort de forme circulaire avec des matières composites renforcées par des fibres

(30) Priorität: 31.05.1990 DE 4017637
(43) Veröffentlichungstag der Anmeldung: 04.12.1991
(73) Patentinhaber: METZELER GIMETALL AG, D-80992 München (DE)
(72) Erfinder: Richter, Matthias, Dr.Ing., W 8084 Inning (DE); Müller, Siegfried, W-8051 Allershausen (DE); Weidner, Ernst, W-8000 München 21 (DE)
(74) Vertreter: Michelis, Theodor

(56) Entgegenhaltungen:
- EP-A- 84 101
- AT-B- 28 924
- DE-A- 3 908 474

## Beschreibung

Die Erfindung bezieht sich auf einen ringförmigen Federkörper aus Faserverbundwerkstoffen zur Schwingungsisolation von Maschinen und Anlagen, mit mindestens zwei konzentrischen Wickelkörpern aus jeweils mehreren Wickellagen von in Umfangsrichtung des Wickelkörpers und quer zur Belastungsrichtung verlaufenden, mit Kunstharz getränkten Fasern, sowie mit zwischen den Wickelkörpern eingewickelten Gleitfolien, und mit zwei einander gegenüberliegenden, als Krafteinleitungselemente ausgebildeter Einspannungen.

Ein derartiger Federkörper ist aus der DE-39 08 474 Al bekannt. Dabei ist zwischen den Wickelkörpern eine Gleitfolie, insbesondere aus PTFE schichtweise eingewickelt, wobei diese Zwischenschicht zweckmäßigerweise auf der einen Seite fest und auf der anderen Seite lose zum benachbarten Wickelkörper geführt werden soll. Derartige Ringfedern mit eingewickelter Folie weisen zwar unter statischer Last die geringsten Setzerscheinungen aller mehrschaligen Varianten auf, haben jedoch eine Reihe prinzipbedingter Nachteile. Bedingt durch das Herstellungsverfahren haftet die eingewickelte Folie im allgemeinen nach der Fertigstellung des Lagers auf beiden Seiten am angrenzenden Laminat an und muß durch eine starke Verformung losgerissen bzw. freigemacht werden. Nach diesem Freimachen haftet die Folie jedoch noch undefiniert teilweise am äußeren und teilweise am inneren Laminat an, wobei bei einer dynamischen Dauerbeanspruchung ein weiteres, jedoch undefiniertes Lösen der Folie erfolgt und es dabei auch zu einem Reißen der Folie in den Übergangsbereichen von äußerer auf innere Haftung kommen kann. Dieser Vorgang kann sich über mehrere tausend Lastwechsel hinziehen und ist mit einer bis zu 8 %-igen Abnahme der Steifigkeit verbunden. Infolge der undefinierten Haftungsbedingungen im Spalt sind alle dynamischen Kennwerte des Lagers, nämlich die dynamische Steifigkeit und die Dämpfung im erheblichen Maße amplitudenabhängig und streben erst nach mehreren tausend Lastwechseln einem Grenzwert entgegen.

Der vorliegenden Erfindung liegt daher die Aufgabe zugrunde, einen Federkörper zu schaffen, der von Anfang an eindeutig definierte Kennwerte aufweist, die darüber hinaus nahezu langzeitstabil sind und die Dauerfestigkeitsgrenze weit nach oben verschoben wird.

Zur Lösung dieser Aufgabe ist erfindungsgemäß vorgesehen, daß jeweils zwischen zwei Wickelkörpern zwei Gleitfolien derart eingewickelt sind, daß sie am jeweiligen wickelkörperseitigen Laminat haften, auf den aufeinanderliegenden Folienseiten aber frei gleitend ausgebildet sind.

Mit einem derartigen Vorsehen von zwei getrennten Gleitfolien, die einerseits fest mit dem Laminat verbunden sind, aber auf der anderen Seite ungehaftet frei auf der anderen Folie gleiten können, erhält man Lagerelemente mit weitgehend amplitudenunabhängigen dynamischen Kennlinien. Dabei wird auch die Dauerfestigkeit, die als 10 %-ige Abnahme der statischen Steifigkeit definiert ist, erst bei sehr hohen Lastwechselzahlen erreicht. Auch nach zweimal 10⁶ Lastwechseln konnte dabei eine Zerstörung der Folie bzw. der Folien nicht beobachtet werden.

Dabei können die Folien jeweils kreuzweise gegeneinander gewickelt sein. Es ist aber auch möglich, daß die Folienschichten mit gleichem Wickelwinkel bei entsprechender Überschneidung in die Laminatschichten eingewickelt sind.

Zur besseren Haftung am Laminat kann es zweckmäßig sein, die Folien einseitig mechanisch vorzubehandeln. Ferner kann zur Verminderung sogenannter Slip-Stick-Effekte die Folien auf der Gleitseite mit einem Gleitmittel beschichtet sein.

Anhand einer schematischen Zeichnung sind Aufbau und Funktionsweise von Ausführungsbeispielen nach der Erfindung näher erläutert. Dabei zeigen
- Fig. 1: eine perspektivische Ansicht eines solchen Ringfederkörpers mit teilweise freigeschnittenem oberen Wickelkörper und Ansicht der Gleitfolien und
- Fig. 2: eine perspektivische Ansicht auf einen Querschnitt einer derartigen Ringfeder mit 3 Wickelkörpern

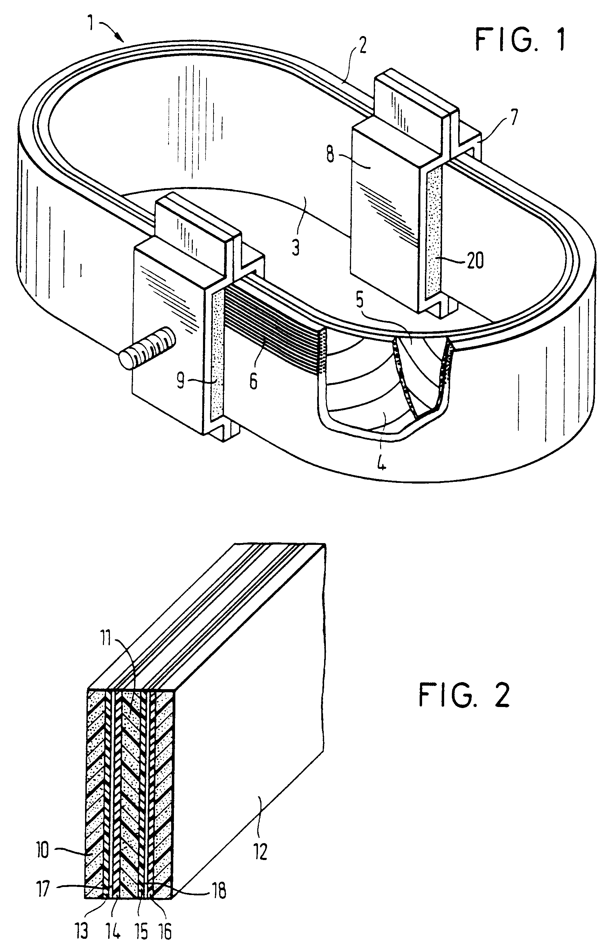

Wie man zunächst aus der perspektivischen Ansicht nach Fig. 1 ersieht, besteht der dort dargestellte, angenähert ovale Federkörper 1 aus zwei konzentrischen Wickelkörpern 2 und 3, zwischen denen in noch zu beschreibender Weise die Gleitfolien 4 und 5 angeordnet sind.

Prinzipiell besteht jeder Wickelkörper 2 bzw. 3 aus mehreren Schichten Fasern, die hauptsächlich quer zur Beanspruchungsrichtung umlaufend gewickelt sind. Im Teilschnitt ist dabei die außenliegende Schicht 6 gezeigt. Einzelne, insbesondere innenliegende Schichten der Wickelkörper 2 bzw. 3 können jedoch auch aus Gewebe mit quer verlaufenden Fasern bestehen bzw. Fasern aufweisen, die in einem von den der äußeren Lage 6 abweichenden Winkel gewickelt sind.

Als verstärkende Fasern kommen im wesentlichen Glasfasern, aber auch Kohlefasern oder Aramit in Frage, während als aushärtbare Matrixmaterialien im wesentlichen Duroplaste oder auch Thermoplaste, z.B. Polyetheretherketon (PEFK), verwendet werden können.

Der fertig gewickelte, getränkte und ausgehärtete Federkörper 1 wird dann in bekannter Weise auf einander gegenüberliegenden Seiten über entsprechende Krafteinleitungselemente an den entsprechenden Lagerpunkten festgelegt. Diese Krafteinleitungselemente können nach dem dargestellten Ausführungsbeispiel aus Bügeln in Form von zwei U-förmigen Laschen 7 und 8 bestehen, die den Federkörper 1 an den Längsseiten umschließen. Dabei sind zweckmäßigerweise zwischen den Laschen 7 und 8 noch elastische Zwischenschichten 9 und 10 einvulkanisiert.

Wie bereits ausgeführt, ist der Federkörper 1 aus zwei konzentrischen Wickelkörpern 2 und 3 aufgebaut. Zwischen diesen beiden Wickelkörpern 2 und 3 sind nunmehr zwei entsprechende Gleitfolien 4 und 5, insbesondere aus PTFE, kreuzweise eingewickelt. Dabei ist die außenliegende Gleitfolie 4 mit dem äußeren Wickelkörper 2 und die innere Gleitfolie 5 mit dem inneren Wickelkörper 3 fest verbunden, während die beiden sich berührenden Flächen der Gleitfolien 4 und 5 frei aufeinander gleiten können.

Durch diese Unterteilung des Federkörpers 1 in mehrere Wickelkörper 2 und 3 wird erreicht, daß wegen der geringen Dicke der einzelnen Wickelkörper Belastungen besser aufgenommen werden können, ohne daß Brüche im Federkörper erfolgen. Durch das freie Gleiten der einzelnen Wickelkörper aufeinander ergeben sich für derartige Lagerelemente weitgehend amplitudenunabhängige dynamische Kennlinien. Wenn, wie bei dem dargestellten Ausführungsbeispiel, ledigleich eine Gleitschicht in der Schichtmitte des Lagerkörpers vorgesehen ist, erhält man ein Lager mit einer Grunddämpfung, die im Bereich eines niedrig dämpfenden Naturkautschuklagers liegt.

Wenn stattdessen der Federkörper in mehr als zwei Wickelkörper mit jeweils entsprechend zwischengeschalteten Gleitschichten unterteilt wird, so erhöht sich die Dämpfung proportional mit der Gleitebenen-Zahl.

In Fig. 2 ist ein Schnitt durch den geraden Bereich eines derartigen Federkörpers mit den Wickelkörpern 10, 11 und 12 dargestellt. Zwischen den beiden Wickelkörpern 10 und 11 sind dabei die Gleitfolien 13 und 14 und zwischen den Wickelkörpern 11 und 12 die Gleitfolien 15 und 16 vorgesehen. Dabei ist die Gleitfolie 13 fest mit dem Wickelkörper 10, die innenliegenden Gleitfolien 14 und 15 mit dem Wickelkörper 11 und die Gleitfolie 16 mit dem Wickelkörper 12 verbunden. Die jeweils aufeinanderliegenden Gleitfolien 13 und 14 bzw. 15 und 16 sind durch entsprechende Spalte 17 und 18 voneinander getrennt, so daß damit diese Gleitfolien frei aufeinandergleiten können.

Damit ergibt sich also ein dreischichtiger Federkörper mit zwei Gleitebenen, so daß sich die drei Wickelkörper bei einer Bewegung nicht gegeneinander verspannen oder in ihrer Bewegung hemmen.

In gleicher Weise ist es aber auch möglich, je nach den geforderten Kennwerten und der aufzunehmenden Belastung auch mehr als drei Wickelkörper mit entsprechenden zwischengeschalteten Gleitschichten zu verwenden.

Die Gleitfolien - z.B. die Folien 4 und 5 - können dabei wie in Fig. 1 dargestellt kreuzweise aufeinander gewickelt werden. Es ist aber auch denkbar, die Folienschichten bei entsprechender Überschneidung mit unverändertem Wickelwinkel in das Laminat einzubringen. Ferner kann eine mechanische Vorbehandlung der Folien zum Erreichen einer noch intensiveren Haftung am Laminat und/oder eine einseitige Beschichtung zum besseren Gleiten bzw. zur Verminderung von Slip-Stick-Effekten zwischen den Folien vorgenommen werden.

Insgesamt ergibt sich somit ein Federkörper, mit dem eine sehr gute Schwingungsisolation in Maschinen und Anlagen, insbesondere bei der Verwendung als Motor- oder Getriebelager, erreicht werden kann. Ferner ist eine Anwendung als Federelement zur Rad- bzw. Achsfederung oder auch als Element zur Abfederung schlagartiger Beanspruchungen, z.B. in Form eines Pralldämpfers, möglich.

Insbesondere ergibt sich damit ein Lager mit hoher Dauerfestigkeit und sehr guten dynamischen Kennwerten bezüglich dynamischer Steifigkeit und Dämpfung, die nahezu langzeitstabil sind.

## Patentansprüche

1. Ringförmiger Federkörper (1) aus Faserverbundwerkstoffen zur Schwingungsisolation von Maschinen und Anlagen, mit mindestens zwei konzentrischen Wickelkörpern (2, 3; 10, 11, 12) aus jeweils mehreren Wickellagen von in Umfangsrichtung der Wickelköper (2, 3; 10, 11, 12) und quer zur Belastungsrichtung verlaufenden, mit Kunstharz getränkten Fasern, sowie mit zwischen den Wickelkörpern (2, 3; 10, 11, 12) eingewickelten Gleitfolien (4, 5; 13, 14, 15, 16), und mit zwei einander gegenüberliegenden, als Krafteinleitungselemente (7, 8) ausgebildete Einspannungen, **dadurch gekennzeichnet, daß** zwischen jeweils zwei Wickelkörpern (2, 3; 10, 11, 12) zwei Gleitfolien (4, 5; 13, 14, 15, 16) derart eingewickelt sind, daß sie am jeweiligen wickelkörperseitigen Laminat haften, auf den aufeinanderliegenden Folienseiten aber frei gleitend ausgebildet sind.

2. Ringförmiger Federkörper nach Anspruch 1, dadurch gekennzeichnet, daß die Folien (4, 5; 13 bis 16) jeweils kreuzweise gegeneinander gewickelt sind.

3. Ringförmiger Federkörper nach Anspruch 1, dadurch gekennzeichnet, daß die Folienschichten (4, 5; 13 bis 16) mit gleichem Wickelwinkel bei entsprechender Überschneidung in die Laminatschichten (2, 3; 10, 11, 12) eingewickelt sind.

4. Ringförmiger Federkörper nach einem der Ansprüche 1 bis 3, dadurch gekennzeichnet, daß die Folien (3, 4; 13 bis 16) zur besseren Haftung am Laminat mechanisch vorbehandelt sind.

5. Ringförmiger Federkörper nach einem der Ansprüche 1 bis 4, dadurch gekennzeichnet, daß die Folien (3, 4; 13 bis 16) auf der Gleitseite mit einem Gleitmittel beschichtet sind.

## Claims

1. A ring-shaped spring element (1) made out of fibre composites for insulating vibrations in machines and installations, with at least two concentric winding elements (2, 3; 10, 11, 12), each comprising a plurality of winding layers of synthetic resin-impregnated fibres extending in the circumferential direction of the winding elements (2, 3; 10, 11, 12) and transversely to the loading direction, with sliding films (4, 5; 13, 14, 15, 16) enclosed between the winding elements (2, 3; 10, 11, 12) and with two clamping elements arranged opposite one another and designed as force introducing elements (7, 8), characterised in that two sliding films (4, 5; 13, 14, 15, 16) are enclosed between two winding elements (2, 3; 10, 11, 12) in each case in such a manner that they adhere to the respective laminate on the winding element side, but are freely slidable on the opposite film side.

2. A ring-shaped spring element according to claim 1, characterised in that the films (4, 5; 13 to 16) are wound crosswise to one another in each case.

3. A ring-shaped spring element according to claim 1, characterised in that the film layers (4, 5; 13 to 16) are wound with the same winding angle with a corresponding intersection of the laminate layers (2, 3; 10, 11, 12).

4. A ring-shaped spring element according to one of claims 1 to 3, characterised in that the films (3, 4; 13 to 16) are mechanically pre-treated for improved adhesion to the laminate.

5. A ring-shaped spring element according to one of claims 1 to 4, characterised in that the films (3, 4; 13 to 16) are coated on the sliding side with a lubricant.

## Revendications

1. Ressort (1) annulaire en matériaux composites fibreux, destiné à l'isolement antivibratoire de machines et d'installations et comprenant au moins deux enroulements (2, 3; 10, 11, 12) concentriques ayant chacun plusieurs couches de fibres imprégnées de résine synthétique et s'étendant dans la direction périphérique des enroulements (2, 3; 10, 11, 12) et transversalement à la direction de charge, ainsi que des feuilles de glissement (4, 5; 13, 14, 15, 16) enroulées entre les enroulements (2, 3; 10, 11, 12), et deux dispositifs de serrage opposés mutuellement et constitués en éléments (7, 8) de transmission de forces, caractérisé en ce que deux feuilles de glissement (4, 5; 13, 14, 15, 16) sont enroulées entre respectivement deux enroulements (2, 3; 10, 11, 12) de manière à adhérer au stratifié du côté de chaque enroulement mais à glisser librement du côté où les feuilles sont superposées.

2. Ressort annulaire suivant la revendication 1, caractérisé en ce que les feuilles (4, 5; 13 à 16) sont enroulées en croix l'une par rapprot à l'autre.

3. Ressort annulaire suivant la revendication 1, caractérisé en ce que les couches de feuille (4, 5; 13 à 16) sont enroulées sous le même angle d'enroulement, tout en se recouvrant de manière adéquate dans les couches du stratifié (2, 3; 10, 11, 12).

4. Ressort annulaire suivant l'une des revendications 1 à 3, caractérisé en ce que les feuilles (3, 4; 13 à 16) sont prétraitées mécaniquement en vue de mieux adhérer au stratifié.

5. Ressort annulaire suivant l'une des revendications 1 à 4, caractérisé en ce que les feuilles (3, 4; 13 à 16) sont revêtues, du côté du glissement, d'un agent lubrifiant.
